# EUROPÄISCHE PATENTANMELDUNG

(11) **EP 2 479 066 A2**
(43) Veröffentlichungstag der Anmeldung: **25.07.2012**
(21) Anmeldenummer: 12151369.1
(22) Anmeldetag: 17.01.2012
(51) Int. Cl.: B60R 11/00, B60R 16/02, F16B 5/08, H01Q 1/22, H01Q 1/32, G01S 19/14

(54) **Sensoranordnung für ein Kraftfahrzeug, Kraftfahrzeug und Verfahren zum Herstellen einer Sensoranordnung**

(30) Priorität: 24.01.2011 DE 102011009267
(71) Anmelder: Valeo Schalter und Sensoren GmbH, 74321 Bietigheim-Bissingen (DE)
(72) Erfinder: Hofmann, Heiko, 74343 Sachsenheim (DE); Horvath, Peter, 71665 Vaihingen a. d. Enz (DE)

(57) **Zusammenfassung**

Es soll eine Sensoranordnung mit zumindest einem Sensor und einem Navigationsempfänger bereitgestellt werden, die besonders kompakt ist und eine geringe Anzahl von Bauteilen aufweist. Eine erfindungsgemäße Sensoranordnung (1) für ein Kraftfahrzeug beinhaltet zumindest einen Sensor (5 bis 9) sowie einen Navigationsempfänger (10) zum Bereitstellen von Positionssignalen, welche eine aktuelle globale Position des Kraftfahrzeugs charakterisieren. Der zumindest eine Sensor (5 bis 9) und der Navigationsempfänger (10) sind in einem gemeinsamen Gehäuse (2) angeordnet. Im Gehäuse (2) sind der zumindest eine Sensor (5 bis 9) und zumindest eine Komponente des Navigationsempfängers (10) auf einer gemeinsamen Leiterplatte (11) angeordnet. Es wird auch ein Verfahren zum Herstellen einer solchen Sensoranordnung (1) bereitgestellt.

## Beschreibung

Die Erfindung betrifft eine Sensoranordnung für ein Kraftfahrzeug, nämlich insbesondere für einen Personenkraftwagen. Die Sensoranordnung umfasst zumindest einen Sensor sowie einen Navigationsempfänger zum Bereitstellen von Positionssignalen, welche eine aktuelle globale beziehungsweise geografische Position des Kraftfahrzeugs charakterisieren. Der zumindest eine Sensor und der Navigationsempfänger sind in einem gemeinsamen Gehäuse angeordnet. Die Erfindung betrifft außerdem ein Kraftfahrzeug mit einer derartigen Sensoranordnung, wie auch ein Verfahren zum Herstellen einer Sensoranordnung für ein Kraftfahrzeug durch Bereitstellen zumindest eines Sensors sowie einer Navigationsempfängers.

Es geht vorliegend insbesondere um eine Sensoranordnung, welche hinter einer Windschutzscheibe Personenkraftwagens platziert wird. Es ist Stand der Technik, bei einer derartigen Sensoranordnung mehrere Sensoren in ein gemeinsames Gehäuse zu integrieren. Es handelt sich hier beispielsweise um einen Regensensor, einen Lichtsensor, einen Feuchtesensor und dergleichen. Bekanntlich kann auch ein Navigationsempfänger in dem gemeinsamen Gehäuse untergebracht sein. Eine Halterung für eine derartige Sensoranordnung ist beispielsweise aus dem Dokument DE 102 11 444 B4 bekannt.

Aus der Druckschrift DE 100 60 447 B4 ist eine Innenspiegelanordnung für ein Kraftfahrzeug bekannt, welche an einer Windschutzscheibe des Kraftfahrzeugs in deren oberem Bereich nahe des Fahrzeughimmels befestigt werden kann. In einem Gehäuse der Innenspiegelanordnung sind Sensoren vorgesehen, die mit ihrer Elektronik in einem Sensorgehäuse angeordnet sind. In diese Innenspiegelanordnung kann auch eine GPS-Antenne (Global Positioning System) integriert sein.

Das Dokument DE 10 2004 061 362 A1 beschreibt ebenfalls eine Sensoranordnung, die an einer Windschutzscheibe eines Kraftfahrzeugs montiert werden kann. Diese Sensoranordnung beinhaltet einen an der Windschutzscheibe befestigbaren Halter, wie auch ein Sensorelement und eine Abdeckung, die den Halter und das Sensorelement zur Windschutzscheibe hin umschließt. An dem Halter ist ein Träger aus Kunststoff angebracht, an welchem ein Halteabschnitt angeformt ist, mit dessen Hilfe eine GPS-Antenne an der Windschutzscheibe positioniert werden kann.

Die bekannten Sensoranordnungen, welche einen Sensor und einen Navigationsempfänger beinhalten, sind insofern als nachteilig anzusehen, als sie relativ viel Bauraum beanspruchen. Sowohl für den Sensor als auch für den Navigationsempfänger müssen nämlich separate Mikrocontroller bereitgestellt sein, welche die Signale des Sensors beziehungsweise des Navigationsempfängers in Bussignale für einen Kommunikationsbus des Kraftfahrzeugs umwandeln, Es muss somit einerseits ein derartiger Mikrocontroller für den Navigationsempfänger bereitgestellt sein; andererseits ist auch ein solcher Mikrocontroller für den Sensor - etwa einen Lichtsensor oder einen Regensensor - erforderlich.

Es ist Aufgabe der Erfindung, eine Lösung aufzuzeigen, wie eine Sensoranordnung der eingangs genannten Gattung besonders kompakt aufgebaut werden kann, wobei die Anzahl der benötigten Bauteile auf ein Minimum reduziert werden soll.

Diese Aufgabe wird erfindungsgemäße durch eine Sensoranordnung mit den Merkmalen des Patentanspruchs 1, durch ein Kraftfahrzeug mit den Merkmalen des Patentanspruchs 9, wie auch durch ein Verfahren mit den Merkmalen des Patentanspruchs 10 gelöst. Vorteilhafte Ausführungen der Erfindung sind Gegenstand der abhängigen Patentansprüche und der Beschreibung.

Eine erfindungsgemäße Sensoranordnung für ein Kraftfahrzeug - insbesondere einen Personenkraftwagen - umfasst zumindest einen Sensor sowie einen Navigationsempfänger, der Positionssignate bereitstellt, welche eine aktuelle globale beziehungsweise geografische Position des Kraftfahrzeugs charakterisieren. Der zumindest eine Sensor und der Navigationsempfänger sind in einem gemeinsamen Gehäuse integriert angeordnet. Erfindungsgemäß ist vorgesehen, dass in dem Gehäuse der zumindest eine Sensor und zumindest eine Komponente des Navigationsempfängers auf einer gemeinsamen Leiterplatte angeordnet sind.

Also wird der erfindungsgemäße Effekt dadurch erzielt, dass der zumindest eine Sensor einerseits sowie wenigstens eine Komponente des Navigationsempfängers andererseits auf derselben Platine - also Leiterplatte - angebracht sind. Eine solche Sensoranordnung kann besonders kompakt aufgebaut werden, und es können insgesamt Bauteile gespart werden. Für den zumindest einen Sensor sowie für den Navigationsempfänger kann nämlich eine gemeinsame Recheneinheit - etwa ein Mikrocontroller - auf der gemeinsamen Platine bereitgestellt sein, welche die Positionssignale des Navigationsempfängers einerseits sowie Sensorsignale des zumindest einen Sensors empfangen und verarbeiten kann. Diese gemeinsame Recheneinheit kann beispielsweise die jeweiligen Signale in geeignete Bussignale umwandeln, welche dann an einen internen Kommunikationsbus des Kraftfahrzeugs abgegeben und über den Kommunikationsbus übertragen werden können. Die gemeinsame Platine eimöglicht somit die Bereitstellung einer gemeinsamen Recheneinheit für den zumindest einen Sensor sowie den Navigationsempfänger, so dass die Anzahl der benötigten Bauelemente auf ein Minimum reduziert und der wertvolle Bauraum gespart werden können.

Der Navigationsempfänger beinhaltet vorzugsweise sowohl eine Antenne (zum Beispiel eine GPS-Antenne) als auch eine Empfängereinheit, welche die empfangenen Antennensignale aufbereitet und als Positionssignale ausgibt. Prinzipiell kann zumindest die Antenne und/oder die Empfängereinheit auf der gemeinsamen Leiterplatte angeordnet sein. Es erweist sich als besonders vorteilhaft, wenn der Navigationsempfänger als integrierter Schaltkreis, insbesondere mit einer integrierten Antenne, ausgebildet ist und dieser integrierte Schaltkreis als eine Baueinheit auf der gemeinsamen Leiterplatte angebracht ist. Auf diesem Wege gelingt es, eine sehr kompakte und bauraumsparende Sensoranordnung zu schaffen.

Neben der zumindest einen Komponente des Navigationsempfängers kann auf der gemeinsamen Leiterplatte zumindest einer der folgenden Sensoren angeordnet sein:
- ein Feuchtesensor, insbesondere zum Messen einer Feuchtigkeit einer Windschutzscheibe des Kraftfahrzeugs, und/oder
- ein Regensensor zum Messen einer Intensität eines Regens und/oder
- ein Lichtsensor zum Messen eines Helligkeitsgrades einer Umgebung des Kraftfahrzeugs und/oder
- ein Sonnenstandssensor zum Messen einer relativen Position der Sonne bezüglich des Kraftfahrzeugs und/oder
- ein Sensor für ein Head-Up-Display, zum Messen der Eigenschaften einer auf die Windschutzscheibe projizierten Anzeige.

Es kann auch vorgesehen sein, dass alle oben genannten Sensoren in das gemeinsame Gehäuse integriert und vorzugsweise auf der gemeinsamen Leiterplatte angebracht sind. Dann wird eine multifunktionelle und dennoch besonders kompakte Sensoranordnung geschaffen.

Die Vorteil der vorliegenden Erfindung kommen dann vollständig zum Tragen, wenn die Sensoranordnung eine für den zumindest einen Sensor und den Navigationsempfänger gemeinsame Recheneinheit (zum Beispiel Mikrocontroller) zum Empfangen von Sensorsignalen des zumindest einen Sensors und zum Empfangen der Positionssignale des Navigationsempfängers aufweist. Die Sensoranordnung kommt bei dieser Ausführungsform mit lediglich einer Recheneinheit aus, die sowohl zum Empfangen der Sensorsignale als auch der Positionssignale ausgebildet ist. Es wird somit keine zusätzliche Recheneinheit für den Navigationsempfänger benötigt, und es können die Kosten gespart werden, wie auch der wertvolle Bauraum. Es erübrigt sich daher der Einsatz einer zusätzlichen Recheneinheit mit den damit verbundenen Nachteilen hinsichtlich der Montage.

Die Abmessungen der Sensoranordnung sind dann minimal, wenn die gemeinsame Recheneinheit auf der gemeinsamen Leiterplatte angeordnet ist.

Die Recheneinheit kann bei der Sensoranordnung auch eine bestimmte Aufgabe übernehmen: Die Recheneinheit kann sowohl die Sensorsignale als auch die Positionssignale in jeweilige Bussignale für einen Kommunikationsbus des Kraftfahrzeugs umwandeln. Dann kann die Recheneinheit selbige Bussignale ausgeben, nämlich insbesondere an den Kommunikationsbus des Kraftfahrzeugs. Somit wird ermöglicht, dass mithilfe ein und derselben Recheneinheit Bussignale für eine Vielzahl von Steuergeräten des Kraftfahrzeugs bereitgestellt werden, die einerseits die durch den zumindest einen Sensor gewonnenen Informationen und andererseits auch die Positionsinformationen des Kraftfahrzeugs beinhalten. Die einzetnen Steuergeräte des Kraftfahrzeugs können dann auf diese Informationen zugreifen und in Abhängigkeit von diesen Informationen unterschiedlichste Funktionalitäten im Kraftfahrzeug bereitstellen.

Die Recheneinheit kann die Bussignale beispielsweise für einen LIN-Bus und/oder einen CAN-Bus des Kraftfahrzeugs erzeugen. Die Bussignale können also für standardisierte beziehungsweise genormte Bussysteme des Kraftfahrzeugs erzeugt werden, so dass die gemeinsame Recheneinheit auch für herkömmliche Bussysteme eingesetzt werden kann. Die Positionssignale des Navigationsempfängers kann die Recheneinheit (Mikrocontroller) beispielsweise über eine UART-Schnittstelle (Universal Asynchronous Receiver Transmitter) empfangen.

Erfindungsgemäß wird darüber hinaus ein Kraftfahrzeug, insbesondere ein Personenkraftwagen, bereitgestellt, welches/welcher eine erfindungsgemäße Sensoranordnung aufweist. Die Sensoranordnung kann an einer Windschutzscheibe des Kraftfahrzeugs im Innenraum des Kraftfahrzeugs angeordnet sein, etwa direkt unterhalb eines Fahrzeughimmels. An der Sensoranordnung kann optional auch ein Innenspiegel gehalten werden.

Ein erfindungsgemäßes Verfahren dient zum Herstellen einer Sensoranordnung für ein Kraftfahrzeug durch Bereitstellen zumindest eines Sensors sowie eines Navigationsempfängers, welcher Positionssignale bereitstellt, die eine aktuelle globale Position des Kraftfahrzeugs charakterisieren. Der zumindest eine Sensor und die zumindest eine Komponente des Navigationsempfängers werden auf einer gemeinsamen Leiterplatte angebracht.

Die mit Bezug auf die erfindungsgemäße Sensoranordnung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer und perspektivischer Darstellung eine Sensoranordnung gemäß einer Ausführungsform der Erfindung; und
- Fig. 2: in schematischer Darstellung eine Leiterplatte, auf welcher eine Vielzahl von Sensoren und ein Navigationsempfänger der Sensoranordnung gemäß Fig. 1 angebracht sind.

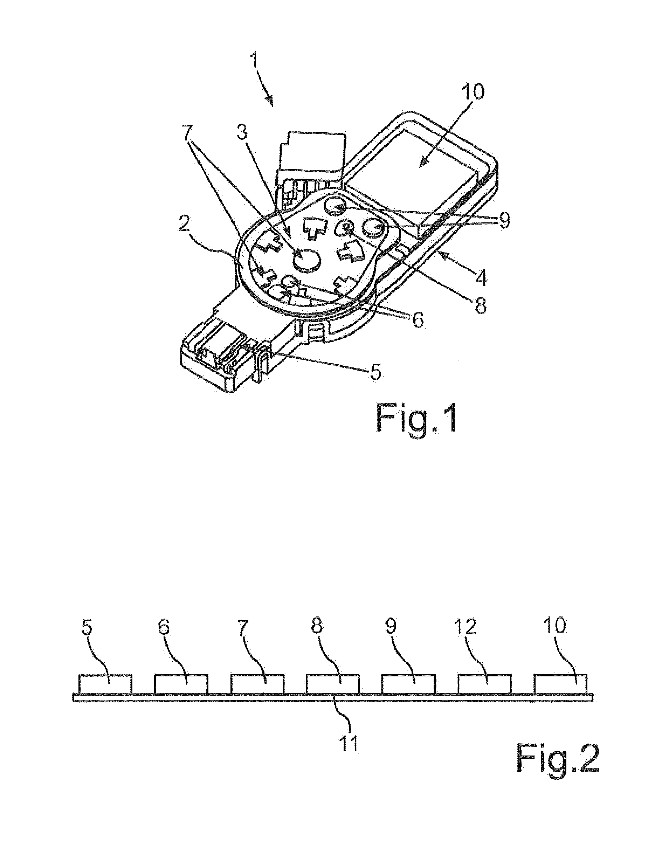

Eine in Fig. 1 dargestellte und insgesamt mit 1 bezeichnete Sensoranordnung kann an einer Windschutzscheibe Personenkraftwagens montiert werden, etwa mithilfe einer Klebeverbindung. Die Sensoranordnung 1 hat ein Gehäuse 2, welches gemeinsam für eine Vielzahl von Sensoren ist. Wird die Sensoranordnung 1 an der Windschutzscheibe platziert, so ist eine in Fig. 1 dargestellte Stirnseite 3 des Gehäuses 2 der Windschutzscheibe zugewandt, während eine hintere Seite 4 dem Innenraum zugewandt und von der Windschutzscheibe abgewandt ist. An dem Gehäuse 2 kann dann gegebenenfalls auch ein Innenspiegel montiert werden.

Im Gehäuse 2 ist ein Feuchtesensor 5 untergebracht, welcher zur Messung der Feuchtigkeit der Oberfläche der Windschutzscheibe dient. Anhand der Informationen des Feuchtesensors 5 kann dann eine Klimaanlage im Kraftfahrzeug angesteuert werden. Der Feuchtesensor 5 misst also die Feuchtigkeit der inneren Oberfläche der Windschutzscheibe im Innenraum des Kraftfahrzeugs.

Im Gehäuse 2 ist außerdem ein Lichtsensor 6 untergebracht, welcher zum Messen eines Helligkeitsgrades der Umgebung des Kraftfahrzeugs dient. In Abhängigkeit von Informationen dieses Lichtsensors 6 kann dann beispielsweise ein Scheinwerfer des Kraftfahrzeugs angesteuert werden.

Außerdem ist im gemeinsamen Gehäuse 2 auch ein Regensensor 7 angeordnet, welcher zur Messung der Intensität eines Regens dient. In Abhängigkeit von der Intensität des Regens kann dann zum Beispiel ein Scheibenwischer des Kraftfahrzeugs angesteuert werden.

Des Weiteren ist in das gemeinsame Gehäuse 2 ein Sensor 8 für ein Head-Up-Display des Kraftfahrzeugs integriert. Der Sensor 8 dient zum Messen der Eigenschaften einer Anzeige, die mithilfe des Head-Up-Displays auf die Windschutzscheibe projiziert wird. In Abhängigkeit von Sensordaten des Sensors 8 kann dann das Head-Up-Display angesteuert werden.

Im gemeinsamen Gehäuse 2 ist darüber hinaus ein Sonnenstandssensor 9 untergebracht, welcher die aktuelle relative Position der Sonne bezüglich des Kraftfahrzeugs misst.

Neben der Vielzahl von Sensoren 5, 6, 7, 8, 9 ist im gemeinsamen Gehäuse 2 auch ein Navigationsempfänger 10 untergebracht, welcher im Ausführungsbeispiel ein GPS-Empfänger (Global Positioning System) ist. Der Navigationsempfanger 10 ist hier in Form eines integrierten Schaltkreises mit einer integrierten Antenne bereitgestellt. Dieser integrierte Schaltkreis kann zum Beispiel in einem Gehäuse des Navigationsempfängers 10 angeordnet sein. Der Navigationsempfänger 10 ist also im Prinzip ein Gehäuse beziehungsweise ein Kasten, in welchem der integrierte Schaltkreis mit der Antenne angeordnet ist.

Alle Sensoren 5, 6, 7, 8, 9, wie auch der Navigationsempfänger 10 sind auf einer gemeinsamen Platine beziehungsweise Leiterplatte 11 angebracht, wie sie schematisch in Fig. 2 dargestellt ist. Die Leiterplatte 11 ist also ein Schaltungsträger, auf welchem die Sensoren 5 bis 9 einerseits sowie der Navigationsempfänger 10 andererseits gehalten sind. Außer den Sensoren 5 bis 9 und dem Navigationsempfänger 10 ist auf der Leiterplatte 11 auch eine Recheneinheit 12 angebracht, weiche im Ausführungsbeispiel ein Mikrocontroller ist. Diese Recheneinheit empfängt sowohl Sensorsignale aller 10 Sensoren 5 bis 9 als auch Positionssignale, die durch den Navigationsempfänger 10 erzeugt werden. Die Recheneinheit 12 empfängt also folgende Signale:
- Sensorsignale des Feuchtesensors 5, welche die aktuelle Feuchtigkeit der Windschutzscheibe charakterisieren,
- Sensorsignale des Lichtsensors 6, welche den aktuellen Helligkeitsgrad der Umgebung charakterisieren,
- Sensorsignale des Regensensors 7, welche die aktuelle Intensität des Regens charakterisieren beziehungsweise eine Information darüber beinhalten, ob es regnet oder nicht,
- Sensorsignale des Sensors 8 für das Head-Up-Display, welche die aktuellen Eigenschaften der projizierten Anzeige charakterisieren,
- Sensorsignale des Sonnenstandssensors 9, welche die aktuelle Position der Sonne bezüglich des Kraftfahrzeugs charakterisieren, und
- Positionssignale des Navigationsempfängers 10, welche Informationen über die jeweils augenblickliche globale Position des Kraftfahrzeugs beinhalten.

Die genannten Signale - also die Sensorsignale der Sensoren 5 bis 9 sowie die Positionssignale - kann die Recheneinheit 12 in jeweilige Bussignale umwandeln, die dann an einen Kommunikationsbus des Kraftfahrzeugs übertragen werden. Die Recheneinheit 12 erzeugt beispielsweise Bussignale für einen LIN-Bus und/oder einen CAN-Bus des Kraftfahrzeugs. Auf die Bussignale, welche die Informationen aller Sensoren 5 bis 9 sowie des Navigationsempfängers 10 beinhalten, können dann unterschiedlichste Busteilnehmer - etwa Steuergeräte - des Kraftfahrzeugs zugreifen.

## Patentansprüche

1. Sensoranordnung (1) an einer Windschutzscheibe im Innenraum eines Kraftfahrzeugs montierbar, mit zumindest einem Sensor (5 bis 9) und einem Navigationsempfänger (10) zum Bereitstellen von Positionssignalen, welche eine aktuelle globale Position des Kraftfahrzeugs charakterisieren, wobei der zumindest eine Sensor (5 bis 9) und der Navigationsempfänger (10) in einem gemeinsamen Gehäuse (2) angeordnet sind,
**dadurch gekennzeichnet, dass**
in dem Gehäuse (2) der zumindest eine Sensor (5 bis 9) und zumindest eine Komponente des Navigationsempfängers (10) auf einer gemeinsamen Leiterplatte (11) angeordnet sind.

2. Sensoranordnung (1) nach Anspruch 1,
**dadurch gekennzeichnet, dass**
eine Antenne des Navigationsempfängers (10) auf der gemeinsamen Leiterplatte (11) angeordnet ist.

3. Sensoranordnung (1) nach Anspruch 1 oder 2,
**dadurch gekennzeichnet, dass**
der Navigationsempfänger (10) als integrierter Schaltkreis, insbesondere mit einer integrierten Antenne, ausgebildet ist, und dass der integrierte Schaltkreis auf der gemeinsamen Leiterplatte (11) angeordnet ist.

4. Sensoranordnung (1) nach einem der vorhergehenden Ansprüche,
**dadurch gekennzeichnet, dass**
auf der gemeinsamen Leiterplatte (11) neben der zumindest einen Komponente des Navigationsempfängers (10) zumindest einer der folgenden Sensoren (5 bis 9) angeordnet ist:
- ein Feuchtesensor (5), insbesondere zum Messen einer Feuchtigkeit einer Windschutzscheibe des Kraftfahrzeugs, und/oder
- ein Regensensor (7) zum einer Intensität eines Regens und/oder
- ein Lichtsensor (6) zum Messen eines Helligkeitsgrades einer Umgebung des Kraftfahrzeugs und/oder
- ein Sonnenstandssensor (9) zum Messen einer relativen Position der Sonne bezüglich des Kraftfahrzeugs und/oder
- ein Sensor (8) für ein Head-Up-Display, zum Messen der Eigenschaften einer auf die Windschutzscheibe projizierten Anzeige.

5. Sensoranordnung (1) nach einem der vorhergehenden Ansprüche,
**gekennzeichnet durch**
eine für den zumindest einen Sensor (5 bis 9) und den Navigationsempfänger (10) gemeinsame Recheneinheit (12) zum Empfangen von Sensorsignalen des zumindest einen Sensors (5 bis 9) und zum Empfangen der Positionssignale.

6. Sensoranordnung (1) nach Anspruch 5,
**dadurch gekennzeichnet, dass**
die Recheneinheit (12) auf der gemeinsamen Leiterplatte (11) angeordnet ist.

7. Sensoranordnung (1) nach Anspruch 5 oder 6,
**dadurch gekennzeichnet, dass**
die gemeinsame Recheneinheit (12) dazu ausgelegt ist, sowohl die Sensorsignale als auch die Positionssignale in jeweilige Bussignale für einen Kommunikationsbus des Kraftfahrzeugs umzuwandeln und die Bussignale auszugeben.

8. Sensoranordnung (1) nach Anspruch 7,
**dadurch gekennzeichnet, dass**
die gemeinsame Recheneinheit (12) dazu ausgelegt ist, die Bussignale für einen LIN-Bus und/oder einen CAN-Bus zu erzeugen.

9. Kraftfahrzeug mit einer Sensoranordnung (1) nach einem der vorhergehenden Ansprüche,

10. Verfahren zum Herstellen einer Sensoranordnung (1) an einer Windschutzscheibe im Innenraum eines Kraftfahrzeugs montierbar durch
- Bereitstellen zumindest eines Sensors (5 bis 9) und
- Bereitstellen eines Navigationsempfängers (10) zum Bereitstellen von Positionssignalen, welche eine aktuelle globale Position des Kraftfahrzeugs charakterisieren,
**gekennzeichnet durch**
- Anbringen des zumindest einen Sensors (5 bis 9) und zumindest einer Komponente des Navigationsempfängers (10) auf einer gemeinsamen Leiterplatte (11).
